# EUROPEAN PATENT APPLICATION

(11) **EP 4 811 209 A1**
(43) Date of publication of application: **23.09.2026**
(21) Application number: 25305406.8
(22) Date of filing: 21.03.2025
(51) Int. Cl.: G06F 40/35

(54) **METHOD FOR NATURAL LANGUAGE VIRTUAL INTERACTION IN DYNAMIC TRANSACTION ENGINES**

(71) Applicant: Amadeus S.A.S., 06410 Biot (FR)
(72) Inventor: ACUNA AGOST, Rodrigo, 06410 Biot (FR); BOUDIA, Mourad, 06410 BIOT (FR); HAUVILLER, Nicolas, 06410 Biot (FR); THOMAS, Eoin, 06410 Biot (FR)
(74) Representative: Samson & Partner Patentanwälte mbB

(57) **Abstract**

A method and system for deploying a natural language (NL) virtual interaction profile in a dynamic transaction management environment are disclosed. The system includes an Al engine configured to generate virtual electronic profiles based on training datasets of NL dialogue sequences between client devices and agent terminals. The virtual profiles simulate interaction behaviors, enabling iterative dialogues with agent terminals in response to dynamically changing transaction variables. By setting a target number of iteration cycles, the method aims to align interactions with predefined efficiency thresholds, reducing redundant access to transaction management engines and optimizing computational resource allocation. The disclosed system enhances processing efficiency within complex multi-component networks by streamlining interactions and minimizing unnecessary communication cycles.

## Description

### FIELD

The present specification relates generally to systems and methods for natural language processing and interaction management.

### BACKGROUND

In dynamic multi-component transaction management systems, natural language interactions between agent terminals and transaction management engines often involve complex dialogues and iterative exchanges. These interactions can result in a significant number of redundant cycles where transaction variables and outcomes fluctuate, leading to inefficiencies in computational and communication resource utilization. For example, incomplete or inefficient interaction sequences may require repeated access to transaction management engines, increasing the computational load on network resources and resulting in delays or resource bottlenecks. Traditional systems lack effective mechanisms for managing certain contributing factors to the frequency of these iteration cycles or setting benchmarks for acceptable interaction lengths, making it difficult to control resource usage and ensure efficient operation across the network.

### SUMMARY

An aspect of the specification provides a method for training an AI engine within a dynamic transaction management system, including: receiving a training electronic dataset of natural language (NL) interaction sequences between a plurality of client devices and plurality of agent terminals; the interaction sequences including dynamically changing transaction variables derived from a plurality of dynamic transaction management engines; the interaction sequences concluding with a termination point; generating at least one virtual interaction profile including a target range of iterative NL dialogue interactions up to the respective termination point; the at least one virtual interaction profile further based on the training electronic dataset of NL interaction sequences; creating a knowledge base of the virtual interaction profiles to meet the target number of iterative interaction cycles.

An aspect of the specification provides a method, wherein the dynamically changing transaction variables are derived from a stochastic environment within the dynamic transaction management engines, the stochastic environment reflecting probabilistic variations in data parameters including at least one of availability and scheduling.

An aspect of the specification provides a method, wherein the virtual interaction profile includes a plurality of parameters representing response times, dialogue flow patterns, and common interaction paths inferred from past interaction sequences, further structured to optimize response efficiency across varying transaction conditions.

An aspect of the specification provides a method, wherein the training electronic dataset includes metadata associated with each interaction sequence, the metadata including time-stamps, session identifiers, and transaction-specific dynamic variables, thereby allowing the virtual interaction profile to simulate time-sensitive responses.

An aspect of the specification provides a method, further including periodically updating the virtual interaction profile based on newly received interaction sequences to account for evolving dynamic transaction variables and stochastic conditions within the transaction management engines.

An aspect of the specification provides a method for deploying a natural language (NL) virtual interaction profile for a dynamic multi-component transaction management system including: loading a large language model (LLM) engine with a profile-specific configuration based on a virtual interaction profile; the virtual interaction profile including a target range of iterative NL dialogue interactions and based on a training electronic dataset of NL interaction sequences between a plurality of client profiles and plurality of electronic profiles having dynamically changing transaction variables; establishing a session with an agent-terminal within the LLM engine according to the profile-specific configuration; iteratively dialoguing between the agent-terminal and the LLM engine by receiving prompts from the agent-terminal and responding to the prompts via the virtual interaction profile via the LLM engine until a termination point; determining a total number of iteration cycles up to the termination point; controlling an output device to generate an exception handling routine if the total number of iteration cycles is outside a target range; and, controlling the output device to confirm a standard path of execution if the total number of iteration cycles is within the target range.

An aspect of the specification provides a method, wherein the dynamically changing transaction variables include stochastic fluctuations in service availability and real-time pricing, and wherein the profile-specific configuration of the LLM engine accounts for these fluctuations by dynamically adjusting response parameters within the interaction sequence.

An aspect of the specification provides a method, wherein the exception handling routine includes a protocol to adapt the virtual interaction profile to reflect deviations observed in the stochastic environment, thereby enhancing the robustness of the LLM engine against unpredictable transaction management conditions.

An aspect of the specification provides a method, further including a step of logging the number of iteration cycles and interaction outcomes for each agent-terminal session in a database, the logged data subsequently used to refine the target range of iterative **NL** dialogue interactions for future sessions.

An aspect of the specification provides a method for training an AI system to enhance travel agent training, including: receiving training electronic interaction data between travel agents and travelers on a booking system; generating data-driven virtual traveler profiles based on the captured interaction data; executing AI-driven interactive dialogues for travel agents using the data-driven virtual traveler profiles, wherein the AI system dynamically generates and modifies dialogue content based on real-time input from the travel agents and pre-established customer behavior models; recording the travel agents' responses and actions during the interactive dialogues, including the questions asked by the agents, the recommendations made, and the actions performed on the booking system; consolidating and analyzing the recorded data to identify best practices, common strategies, and effective decision-making processes used by the travel agents; creating a knowledge base from the consolidated data, wherein the knowledge base includes the curated best practices and the common strategies.

An aspect of the specification provides a method, further including: integrating multiple disparate data types, including one or more of text, numerical data, categorical data, and image data, from a plurality of data sources including booking records, customer reviews, social media interactions, and travel itineraries; preprocessing and normalizing the integrated data to create a unified dataset, wherein the unified dataset is utilized to construct data-driven virtual traveler profiles and refine customer behavior models, thereby enhancing the accuracy and realism of the AI-driven interactive dialogues with travel agents.

An aspect of the specification provides a method, further including: clustering traveler attributes including demographic characteristics, travel preferences, and booking behaviors using a clustering algorithm, wherein the clustering is performed based on a predefined similarity threshold to group travelers with shared attributes; constructing a reduced set of data-driven virtual traveler profiles by merging similar traveler profiles into common profiles, such that each common profile represents a cluster of travelers with shared attributes within the similarity threshold; determining the granularity of each common profile by evaluating a divergence metric, wherein the divergence metric quantifies the variance within each cluster based on key attributes such as age, travel frequency, and budget sensitivity; optimizing the AI-driven interactive dialogues by selecting the reduced set of common traveler profiles that meet a predefined divergence metric threshold, such that the AI system maintain sufficient granularity to effectively simulate divergent actual profiles while minimizing the number of unique dialogue models required for training travel agents.

An aspect of the specification provides a method for training travel agents using an AI system, including: providing real-time assistance to travel agents during customer interactions by utilizing a knowledge base generated from consolidated data of expert travel interactions, wherein the real-time assistance includes suggesting questions to ask and recommendations to make based on customer input; training new travel agents by simulating interactions with synthetic traveler personas using the knowledge base, wherein the training includes exposing agents to a variety of travel scenarios and teaching them effective strategies for managing those scenarios; integrating the AI system into a front office application used by travel agents, allowing seamless access to the AI system's real-time assistance and training features during live customer interactions; monitoring the effectiveness of travel agents' interactions with customers using the integrated AI system and gathering feedback on the AI system's performance; updating the knowledge base based on the monitored effectiveness and feedback, wherein the updated knowledge base reflects new insights and improvements to further enhance the training and support provided to travel agents.

An aspect of the specification provides a method, wherein the LLM engine is configured to prioritize interaction paths based on historical success rates and user satisfaction scores associated with previous interaction sequences.

An aspect of the specification provides a method, further comprising clustering user attributes within the training electronic dataset to create segmented virtual interaction profiles that optimize responses based on shared demographic or behavioral characteristics.

An aspect of the specification provides a method, wherein the updating of the virtual interaction profile incorporates real-time feedback from active user sessions to dynamically adjust the target range of iterative dialogue interactions.

An aspect of the specification provides a method, wherein the exception handling routine further includes generating alerts or recommendations for manual intervention by a system administrator or human agent.

An aspect of the specification provides a method, wherein the virtual interaction profile includes predictive models for estimating future interaction outcomes based on current transaction variables and historical interaction patterns.

An aspect of the specification provides a method, further comprising integrating voice-to-text and text-to-voice capabilities into the virtual interaction profile, enabling seamless multimodal interactions between client devices and agent terminals.

An aspect of the specification provides a method, wherein the database logs are periodically analyzed using machine learning algorithms to identify emerging patterns or anomalies in interaction sequences, which are then used to refine virtual interaction profiles.

An aspect of the specification provides a method, wherein the LLM engine dynamically adjusts the response timing and content of the virtual interaction profile to simulate realistic delays and conversational tones reflective of human interactions.

An aspect of the specification provides a method, wherein the virtual interaction profile incorporates sentiment analysis to adapt the tone and style of responses in real-time based on inferred user emotions during the interaction sequence.

An aspect of the specification provides a method, wherein the virtual interaction profile includes a predictive model for suggesting alternative transaction options when the initial interaction sequence approaches a termination point.

These aspects may be combined with each other.

The present specification also contemplates methods, systems, apparatuses and computer readable media according to the foregoing.

### BRIEF DESCRIPTION OF THE FIGURES

The present specification includes the attached Figures, in which:
Figure 1 shows a system for training a natural language (NL) virtual interaction knowledge base.
Figure 2 shows a schematic diagram of a non-limiting example of internal components of the AI Engine of Figure 1.
Figure 3 shows a schematic diagram of a non-limiting example of a stack of components associated with the AI Engine of Figure 2.
Figure 4 shows a flowchart depicting a method for training a natural language (NL) virtual interaction knowledge base.
Figure 5 shows a variant on the system of Figure 1 for deploying one or more NL virtual interaction profiles.
Figure 6 shows a flowchart depicting a method for deploying an NL virtual interaction profile.
Figure 7 shows a variant on the system of Figure 5.
Figure 8 shows a flowchart and related data blocks depicting a specific example method for generating a virtual interaction profile as part of implementing block 408 of method 400.
Figure 9 shows a schema that provides an example implementation for building virtual interaction profiles.

### DETAILED DESCRIPTION

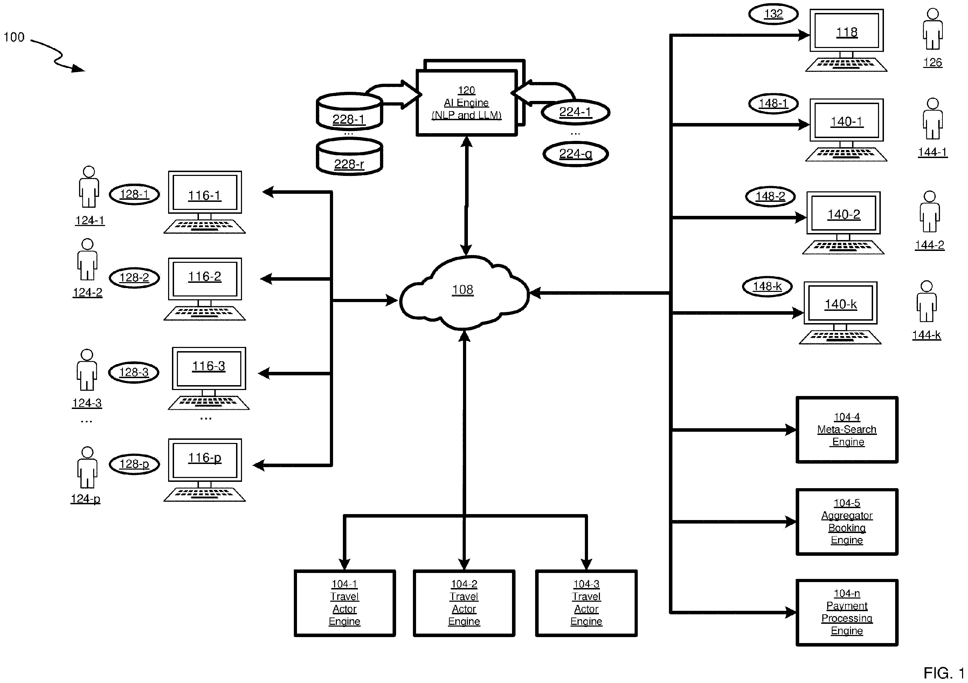

Figure 1 shows a system for training a natural language (NL) virtual interaction knowledge base indicated generally at 100. System 100 comprises a plurality of dynamic transaction management engines 104-1, 104-2 ... 104-n. (Collectively, engines 104-1, 104-2 ... 104-n are referred to as engines 104, and generically, as engine 104. This nomenclature is used elsewhere herein.) In system 100, engines 104 connect to a network 108 such as the Internet. Network 108 interconnects dynamic transaction management engines 104 with a plurality of client devices 116, at least one administrator terminal 118 and an artificial intelligence (AI) engine 120. Each client device 116 corresponds to a different user 124, with an identifier object 128 associating each user 124 with its respective device 116. Similarly, management terminal 118 corresponds to a system administrator 126. An identifier object 132 associates administrator 126 with management terminal 118. For context, administrator 126 may configure AI engine 120, as will be discussed in further detail below.

Additionally, AI engine 120 is connected, via network 108, to agent terminals 140, each corresponding to a different agent 144. Each agent 144 has its own identifier object 148, which serves to uniquely identify each agent 144 within system 100. The agent terminals 140 can be used to interact with interaction sequences conducted with client devices 116 over network 108. The interaction sequences can be based on video, text, voice, augmented reality or virtual reality according to the type of hardware respective to client devices 116 and agent terminals 140. In a present embodiment, as will be discussed further below, the interaction sequences represent collaborative interactions respective to dynamically changing transaction variables provided by dynamic transaction management engines 104.

System 100 is applicable across a variety of use cases, but a presently preferred illustrative embodiment is travel, where system 100 can be used to electronically book travel itineraries for given user 124, with the involvement of agents 144 using agent terminals 140 to interact with the dynamic transaction management engines 104 while communicating with 116 on behalf of given user 124 to create electronic travel itineraries.

Thus, dynamic transaction management engines 104 can be based on any present or future electronic servers or computing architectures that, amongst other things, manage searches and electronic bookings for transportation, accommodation, meals and/or any other booking functions associated with travel. For instance, dynamic transaction management engines 104 can handle reservations for airlines, trains, car rentals, ride-sharing services and/or conduct electronic travel searches, complete electronic travel bookings, or complete payment processing. Thus, in the present illustrative embodiment, the dynamically changing transaction variables from dynamic transaction management engines 104 can include, but are not limited to, real-time pricing, availability changes, and service options.

To elaborate with some specific but non-limiting examples, engines 104-1, 104-2 and 104-3 can be generalized as "travel actor engines" which may be respective to individual airlines, hotels, car rental engines and can optionally interface with various providers. Engines 104-1, 104-2 and 104-3 may utilize Global Distribution Systems (GDS) like Amadeus^{™}, Sabre^{™} , and Travelport^{™}. Engines 104-1, 104-2 and 104-3 may also utilize the New Distribution Capability (NDC) standards for direct connections to airlines

One or more of engines 104-1, 104-2 and 104-3 can manage reservations for hotels, vacation rentals, and other lodging options. These engines can connect with hotel chains (e.g., Marriott^{™}, Hilton^{™}, online travel agencies (e.g., Booking.com^{™}, Expedia^{™}, and home-sharing platforms (e.g., Airbnb^{™}, VRBO^{™}) to facilitate booking experiences.

One or more of engines 104-1, 104-2 and 104-3 can coordinate dining reservations and meal plans, integrating with restaurant reservation systems (e.g., OpenTable^{™}, Resy^{™}) and catering services to provide travelers with convenient dining options. These engines can book tables at their preferred restaurants or arrange for meal services.

As part of the illustrative embodiment, engine 104-4 is a travel meta-search engine such as Google^{™} Flights (https://www.google.com/travel/flights) that aggregates search results from other engines 104, but otherwise redirects selections from agent terminals 140 to other individual engines 104. As part of the illustrative embodiment, engine 104-5 can be an aggregator booking engine (which may incorporate the same function as engine 104-4) including sites like Expedia^{™}, but at the same time may also act to complete travel bookings directly.

As part of the illustrative embodiment, payment processing transaction management engine 104-n can be a payment processing server operated by Visa, Mastercard, Google Pay, Apple Pay, a bank etc. that can be used to process payments for bookings made over the remaining dynamic transaction management engines 104.

Engines 104 are referred to as "dynamic transaction management engines" in the context of the present specification because they operate within a constantly evolving environment where transaction parameters, interactions, and service availabilities are variable and subject to change. Unlike static systems that merely store data or offer a fixed set of responses, the dynamic transaction management engines 104 continuously adapt to varying conditions such as availability of travel options, changing preferences, changing itinerary availabilities, real-time pricing updates, and the fluctuating demand for services.

For example, when a search for a flight or accommodation through meta-search engine 104-4 is initiated, it rapidly aggregates results from multiple sources, taking into account real-time availability and any adjustments in pricing or preferred criteria. Engine 104-4 synchronizes with various travel actor engines 104-1, 104-2 104-3 to reflect the most current data available respective to options for flights, accommodations, car rentals, etc. To elaborate, when traffic on network 108 is high, the synchronization between 104-4 and travel actor engines 104-1, 104-2, 104-3 may be challenged due to the processing and bandwidth intensity; and, as will be discussed further below, operation of engine 104-4 and other engines 104 can accordingly benefit from efficient traffic on network 108. This challenge is not limited to engine 104-4 and is exemplary of challenges with inefficient use of resources of network 108 and dynamic transaction management engines 104.

Indeed, when an agent 144 accesses an aggregator booking engine 104-5 via agent terminal 140 to finalize a reservation, engine 104-5 dynamically recalculates parameters considering constantly changing variables such as seat availability, room selection, or rental car options, ensuring that the user's choice aligns with the current offerings. This adaptability seeks to avoids conflicts such as overbooking or offering outdated options, thus optimizing the booking process for the agent and the traveler. Again, however, such adaptability recognizes the intense amount of processing and network resources and thus operation of those dynamic transaction management engines 104 benefits from efficient use of the limited computational resources of system 100.

Moreover, payment processing engine 104-n adds another layer of dynamic interaction by verifying transaction integrity, adjusting for currency fluctuations, and compliance with regional payment regulations. This process involves real-time interactions with external payment networks, reflecting another set of constantly changing variables.

Thus, the term "dynamic transaction management" reflects the general functionality of engines 104, which operate in real-time to provide synchronized and up-to-date interactions within a stochastic environment. For instance, the availability of flights, hotel rooms, and rental cars in response to a query may fluctuate unpredictably based on current demand, cancellation rates, and inventory updates across multiple sources. This stochastic behavior means that identical queries made at different times, or even milliseconds apart, may yield different results due to variable pricing, availability, or service options. These engines 104 thus continuously process input data from a variety of sources, integrate that data into coherent reports displayed at agent terminals 140, and dynamically adjust to probabilistic changes in availability and bespoke preferences as specified by an identifier object 128 and input from a given user 124, as moderated by agents 144 via agent terminals 140. The preferences can be electronically expressed through communications from a given client device 116 to a corresponding agent terminal 140. The agent 144, in turn, utilizes agent terminals 140 to query dynamic transaction management engines 104 to, for example, construct an electronic travel itinerary. As further detailed below, this real-time adaptability within each dynamic transaction management engine 104, combined with the evolving interactions between a given user 124 and agent 144 through client devices 116, network 108, and agent terminals 140, can tailor electronic travel itineraries to the unique preferences and constraints of each user 124. These iterative dialogues, occurring within a stochastic framework of constantly changing variables from engines 104, culminate in a termination point, resulting in either: a) no electronic itinerary; b) an identified electronic itinerary placed on "hold" within one or more engines 104; or c) a confirmed booking of an electronic itinerary

It is also noteworthy that the various identifier objects 128 corresponding to each given user 124 can typically be grouped according to similar attributes, such as the number of travelers, ages, destinations, durations, travel purpose, service levels, and other attributes. This enables users 124 with similar attributes across different identifier objects 128 to be grouped into profiles that are common to certain groups of users 124. Consequently, the iterative dialogues pairing a certain agent 144 with a given identifier object 128 and user 124 can generate an interaction profile, which can serve as a template for a different user 124 with a different identifier object 128 that shares common attributes with the same or similar profile. As will be explained further below, these interaction profiles can be aggregated into virtual electronic profiles that are maintained within AI engine 120.

However, before elaborating further on virtual electronic profiles, various aspects of the nodes in system 100 will be discussed in further detail. Client devices 116 can be any type of human-machine interface for interacting with agent terminals 140. For example, client devices 116 can include traditional laptop computers, desktop computers, mobile phones, tablet computers and any other device that can be used to receive and send content that complement the input and output hardware devices associated with a given client device 116. It is contemplated that client devices 116 can include virtual or augmented reality gear complementary to virtual reality or augmented reality or "metaverse" environments that can be offered on content servers (not shown) that provide a virtual meeting place for given user 124 and agent 144 based on the hardware capabilities accessed by each. Each client device 116 can also be operated by a different user 124 (other than the example pairings shown in Figure 1) by associating a respective identifier object 128 that uniquely identifies a given user 124 accessing a given client device 116 in system 100. To summarize, client devices 116 are based on any suitable client computing platform operated by users 124 that may have an interest in the content being provided by engines 104 as moderated by agents 144 operating agent terminals 140, who in turn navigate the dynamic nature of options on dynamic transaction management engines 104.

Administrator terminal 118 can also be any type of human-machine interface of the same type as client devices 116. Administrator terminal 118 can be operated by an administrator 126. Administrator terminal 118 can be used to configure AI engine 120 in view of the virtual interaction profiles derived from monitoring interactions between client devices 116 and agent terminals 140. In variants, according to scale of system 100, a plurality of administrator terminals 118 can be provided that are respective to one or more AI engine 120 and/or one more dynamic transaction management engines 104 and/or one or more client devices 116.

A person of skill in the art is to recognize that the form of an identifier object 128 is not particularly limited, and in a simple example embodiment, can include a primary index key such as an alpha-numerical sequence that is entirely unique in relation to other identifier objects in system 100. Identifier objects can also be more complex as they may be combinations of account credentials (e.g. user name, password, Two-factor authentication token, etc.) that uniquely identify a given user 124. Identifier objects 128 themselves may also be mere indexes that point to other identifier objects, such as one or more accounts. The salient point is that they are uniquely identifiable within system 100 in association with what they represent. Identifier objects 128, or the accounts they are indexed to, can include profiles and other demographic information (as articulated elsewhere herein) associated with its respective users 124 which can be used as part of a targeted search. Likewise, identifier objects 148 have similar structural and functional purposes as identifier objects 128.

In general, AI engine 120 is configured to receive an electronic dataset of natural language (NL) interaction sequences between a plurality of client devices 116 and a plurality of agent terminals 140. The interaction sequences include dynamically changing transaction variables derived from a plurality of dynamic transaction management engines 104, where the interaction sequences conclude with a termination point. AI engine 120 is further configured to generate at least one virtual interaction profile that includes a target range of iterative NL dialogue interactions up to the respective termination point. The at least one virtual interaction profile is based on training from the electronic dataset of NL interaction sequences. AI engine 120 is further configured to create a knowledge base of the virtual electronic profiles and an associated target number of iterative interaction cycles.

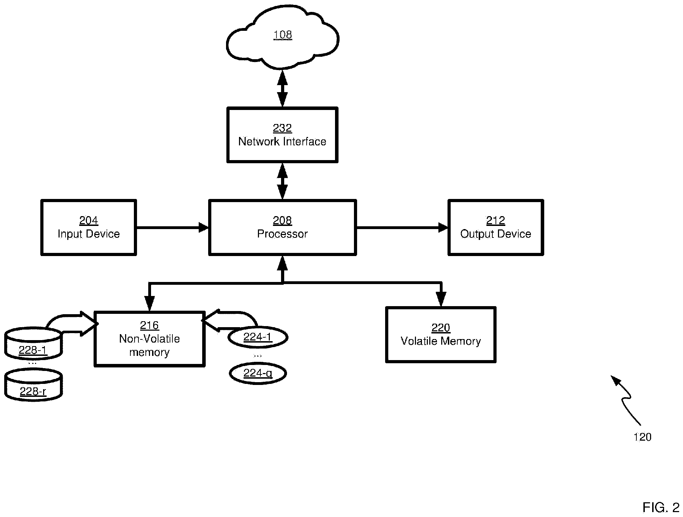

Having described an overview of system 100, it is useful to comment on the hardware infrastructure of system 100. Figure 2 shows a schematic diagram of a non-limiting example of internal components of AI engine 120.

AI engine 120 can include at least one input device 204. Input device 204 may include traditional input mechanisms like keyboards or mice. Output device 212 may be a display or could be a speaker for providing real-time feedback. In the context of system 100, administrator terminal 118 would generally serve as a human-interface of keyboard, mouse (input devices) and display (output devices) on behalf of AI engine 120, with AI engine 120 omitting local versions of same, while network interface 232 monitors data streams over network 108 and sends signals over network 108 to control various other nodes of system 100, thus obviating the need for a local input device 204 or output device 212 at AI engine 120, notwithstanding their presence in Figure 2.

Processor 208 may be implemented as a plurality of processors, one or more multicore processors, or specialized hardware accelerators, such as Graphics Processing Units (GPUs), Tensor Processing Units (TPUs), or similar parallel processing units optimized for handling large-scale data and complex machine learning models. In certain embodiments, processor 208 may include a memory-centric or near-memory compute architecture, where processing elements are co-located with memory cells to minimize data transfer latency and power consumption, which is beneficial for applications involving high-speed inference. Processor 208 may be configured to execute different programming instructions, including those optimized for AI and machine learning tasks, responsive to input received via one or more input devices 204 and to control one or more output devices 212 to generate output on those devices.

To fulfill its programming functions, processor 208 is configured to communicate with one or more memory units, including non-volatile memory 216 and volatile memory 220. Non-volatile memory 216 can be based on any persistent memory technology, such as an Erasable Electronic Programmable Read-Only Memory ("EEPROM"), flash memory, solid-state hard disk (SSD), other types of hard disks, or combinations thereof. In embodiments using a memory-centric architecture, memory 216 may include processing units embedded within or adjacent to memory cells to reduce latency and improve energy efficiency in data handling, supporting high-performance inference tasks. Non-volatile memory 216 may also be described as a non-transitory computer-readable medium, with multiple types of non-volatile memory 216 provided as needed.

Volatile memory 220 can be based on any random access memory (RAM) technology, such as Double Data Rate (DDR) Synchronous Dynamic Random-Access Memory (SDRAM). In certain embodiments, volatile memory 220 may incorporate high-speed, low-latency configurations, supporting rapid data access and processing required for real-time inference tasks. Other types of volatile memory 220, such as Low-Power DDR (LPDDR) or High-Bandwidth Memory (HBM), are also contemplated to optimize performance in high-computation environments.

Processor 208 also connects to network 108 via a network interface 232. As noted, network interface 232 can also be used to connect another computing device that has an input and output device (e.g. administrator terminal 118), thereby obviating the need for input device 204 and/or output device 212 altogether. The network interface 232 facilitates the transmission of interaction data streams from dynamic transaction management engines 104, client devices 116, agent terminals 140 and administrator terminal 118 via network 108, enabling real-time adjustments to AI engine 120 based on evolving interaction sequences.

Programming instructions in the form of applications 224 are typically maintained, persistently, in non-volatile memory 216 and used by the processor 208 which reads from and writes to volatile memory 220 during the execution of applications 224. Various methods discussed herein can be coded as one or more applications 224. One or more tables or databases 228 are maintained in non-volatile memory 216 for use by applications 224. Applications 224 include machine learning models or NLP modules configured for training and deployment of virtual interaction profiles. Applications 224 also include executable code for the various methods, and their variants, described herein. Databases 228 can include the various machine learning models developed, trained and maintained herein.

The infrastructure of AI engine 120, or a variant thereon, can be used to implement any of the computing nodes in system 100, including dynamic transaction management engines 104, agent terminals 140 and client devices 116.

By the same token, a plurality of AI engines 120 may be provided. Overall, the engines 104 and/or engine 120 and other nodes in system 100 may be implemented using cloud computing platforms such as Microsoft Azure^{™} or Amazon Web Services (AWS)^{™}.

Furthermore, one or more of the engine nodes in system 100 (e.g. AI engine 120, dynamic transaction management engines 104) may also be implemented as virtual machines and/or with mirror images to provide load balancing.

A person of skill in the art will recognize that the core elements of processor 208, input device 204, output device 212, non-volatile memory 216, volatile memory 220 and network interface 232, as described in relation to the server environment of AI engine 120, have analogues in the different form factors of client machines such as those that can be used to implement client devices 116, administrator terminal 118 and agent terminals 140.

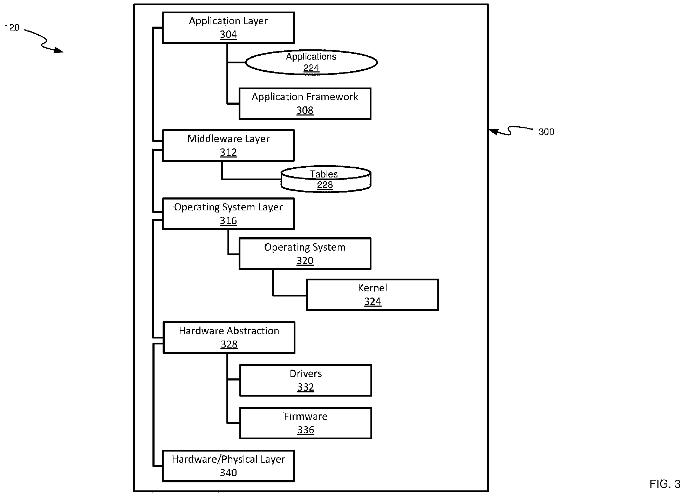

Figure 3 provides a schematic representation of AI engine 120, illustrating the detailed view of a stack 300 employed in the computing environment of AI engine 120. Stack 300 depicts the different layers involved in the operation of AI engine 120, from the application layer 304 down to the physical hardware layer 340.

At the highest level, the application layer 304 encompasses various applications 224 and application frameworks 308. Applications 224 include AI-specific software programs such as machine learning frameworks (e.g., TensorFlow, PyTorch) that perform training and deployment tasks for virtual interaction profiles. Application frameworks 308 provide libraries and tools that streamline the development and execution of these AI models.

Beneath the application layer is the middleware layer 312, which includes tables 228 and other middleware components. Middleware 312 serves as an intermediary, providing essential services like database management and data processing capabilities, which are crucial for managing the training datasets and interaction sequences used in training the AI models. Examples of middleware include database management systems and web servers that support data exchanges between various components of system 100.

The operating system layer 316 consists of the operating system 320 and kernel 324. The operating system 320 manages hardware resources and provides foundational services to applications 224, while the kernel 324 handles core system operations, facilitating efficient communication between hardware and software components.

The hardware abstraction layer 328 includes drivers 332 and firmware 336. Drivers 332 allow the operating system 320 and other software to communicate with hardware devices shown in Figure 2, such as input device 204, output device 212, and network interface 232. Firmware 336 enables low-level control of the hardware components in the physical hardware layer 340, ensuring smooth operation and integration with the software stack.

At the base of the stack is the hardware and physical layer 340 of AI engine 120, which encompasses physical components like the input device 204, processor 208, non-volatile memory 216, volatile memory 220, and network interface 232. This layer can provide the processing power and storage capacity required for training AI models and executing real-time interactions, including configurations with near-memory compute architectures to support high-speed inference tasks.

Stack 300 illustrates how the different layers interact within the computing environment of AI engine 120, enabling the training and deployment of AI models. Each layer is interdependent, relying on the services and capabilities of the layer below it, forming a cohesive system that powers the training processes and real-time adaptability of AI engine 120. This layered structure allows the AI engine 120 to handle the complex requirements of dynamic transaction management engines 104, client devices 116, and agent terminals 140 within system 100.

The stack 300 in Figure 3 is adaptable across various computing environments, including server infrastructures for dynamic transaction management engines 104, client devices 116, administrator terminal 118, and agent terminals 140. Whether implemented in a traditional server environment or as virtual machines on cloud platforms like Microsoft Azure^{™} or Amazon Web Services (AWS)^{™}, the described layers of stack 300 provide a robust framework for managing and executing software applications 224 and middleware components like tables 228, critical for the effective training and operation of the AI models.

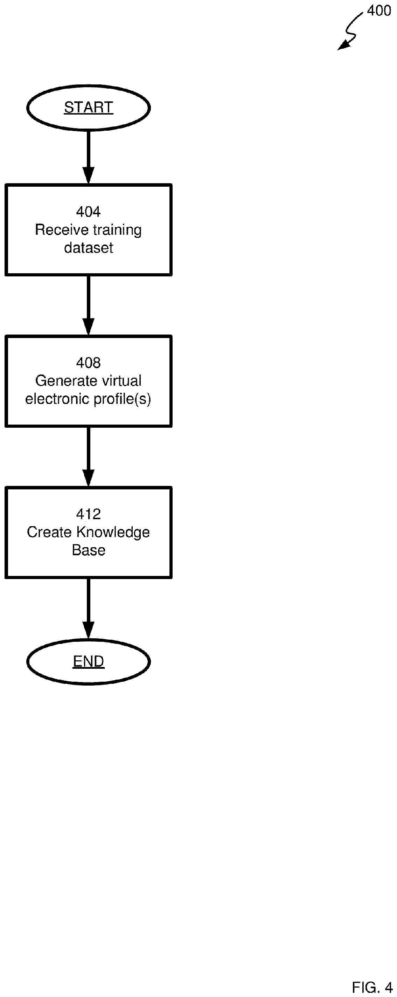

Figure 4 shows a flowchart depicting a method for training an electronic natural language (NL) virtual interaction knowledge base, indicated generally at 400. Method 400 can be implemented on system 100. Persons skilled in the art may choose to implement method 400 on system 100 or variants thereon, or with certain blocks omitted, performed in parallel or in a different order than shown. Method 400 can thus also be varied. However, for purposes of explanation, method 400 will be described in relation to its performance on system 100 with a specific focus on treating method 400 as, for example, application 224-2 maintained within AI engine 120 and its interactions with the other nodes in system 100.

Block 404 comprises receiving a training dataset. To elaborate upon the present embodiment, block 404 comprises receiving a training electronic dataset of natural language (NL) interaction sequences between a plurality of client devices and a plurality of agent terminals. These interaction sequences are shaped by, and adapt to, dynamically changing transaction variables that reflect the stochastic environment introduced by the constantly evolving states of the plurality of dynamic transaction management engines 104, as illustrated in Figure 1. The interaction sequences are transmitted from client devices 116 (representing users 124) and agent terminals 140 (representing agents 144) over network 108. These sequences conclude at what is discussed herein as a "termination point", which may represent a range of outcomes such as a completion of an electronic travel itinerary to be associated with a respective identifier object 128, a tentative electronic travel itinerary to be associated with a respective identifier object 128, or the an abandonment flag indicating that the interaction sequences did not terminate with either an electronic travel itinerary or a tentative travel itinerary. Other definitions of termination point are contemplated, such as a partially completed electronic travel itinerary. Examples include:

Cancellation of a Reservation: A termination point can occur when a previously initiated booking or reservation is cancelled before it reaches completion, which would still provide valuable data on the conditions or reasons that lead to such cancellations. Other examples of termination points can include:

Timeout or Session Expiry: A termination point can be defined when an interaction session times out or expires due to inactivity, where no further input is received from either the user 124 or agent 144 within a predefined period.

Change Request: A user 124 can initiate a change request (e.g., modifying dates, destinations, or services) that pauses the original itinerary creation process, leading to a termination point of the initial sequence before a new interaction sequence begins.

Unsuccessful Payment or Payment Decline: A termination point can also occur when an electronic payment attempt fails or is declined, preventing the finalization of an itinerary.

Insufficient Availability: A termination point can also occur when options, such as flights or accommodations, but no available options meet the criteria.

User Opt-Out or Disengagement: If a user 124 manually terminates the interaction by choosing to exit the booking process (e.g., by closing the browser or app), this can be treated as a termination point.

Manual Save or Draft Status: A termination point can occur when a user 124 or agent 144 saves the current status of the itinerary as a draft, indicating that further action is postponed.

In a present embodiment, the received dataset at block 404 can be gathered by AI engine 120 by monitoring communication flows that contain natural language interaction sequences between client devices 116 and agent terminals 140 up to the termination point, with respective sources identified. In other embodiments, the received training dataset can be historical, where the dataset is recorded/captured and then, in complete form, received at AI engine 120. The received training data is in certain embodiments continuously updated, in that method 400 runs continually to support method 600 (discussed below), recognizing the very dynamic nature of transaction management engines 104 and evolution of interactions that may occur between client devices 116 and agent terminals 140 over time. The received dataset also contains metadata associated with each interaction, including time-stamps, transaction identifiers, and dynamic variables such as updated prices or availability from the engines 104. Such a received training dataset can be stored in one or more of databases 228.

Block 408 comprises generating at least one virtual interaction profile. To elaborate on the present embodiment, block 408 comprises analyzing the training electronic dataset received at block 404 to generate at least one virtual interaction profile. This profile includes a target range of iterative NL dialogue interactions up to the respective termination point. AI engine 120 is configured to processes the data to recognize NL dialogue patterns between users 124 (via hard electronic data converted from dialogue input received at client devices 116) and agents 144 (via hard electronic data converted from dialogue input received at agent terminals 140), including recognizing the ongoing adaptions within the NL dialogue to the dynamically changing transaction variables from engines 104, such as availability changes. As will be discussed further below, the generated virtual electronic profile emulates behaviors of users 124 in virtual form, allowing AI engine 120 to simulate dialogues that mimic the dialogues interactions seen in the training dataset from block 404. In a present embodiment, the virtual profiles can include parameters such as average response times, typical queries made by given user 124, and common dialogue structures of those users 124.

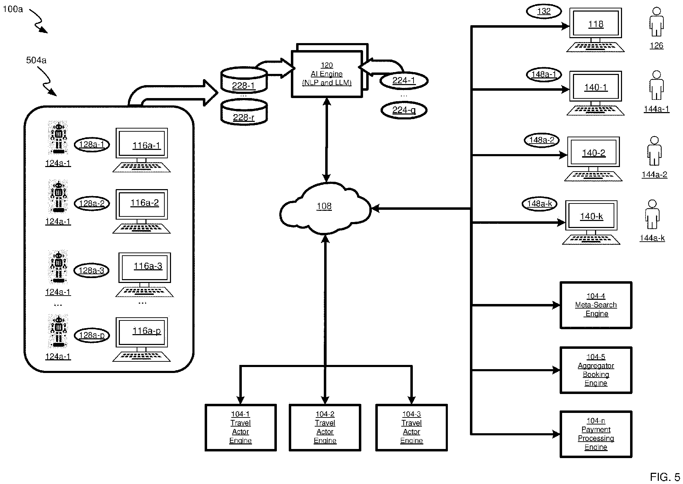

Block 412 comprises creating a knowledge base of virtual electronic profiles. To elaborate, block 412 involves storing and organizing the at least one virtual electronic profile generated in block 408 into a knowledge base within AI engine 120, as illustrated in Figure 1. The knowledge base can be stored, for example, in one or more databases 228 to include, as an illustrative example, a virtual interaction profile 504a, (discussed below in relation to Figure 5). Such a virtual interaction profile 504a is stored these profiles in a structured manner, allowing AI engine 120 to reference the knowledge base in future deployments.

Before discussing further embodiments, while the foregoing discussion of method 400 introduces an overview with certain detail, it is to be understood that method 400 and/or various blocks of method 400 can be varied and/or augmented. These variations can influence how AI engine 120 processes interaction data, adapts to different contexts, or scales - indeed in the context of travel itineraries, system 100 has the potential to scale globally, across large geographies and numbers of client devices 116 and engines 104. Such flexibility is particularly relevant for adapting the training of AI engine 120 to different dynamic transaction management engines 104, client devices 116, agent terminals 140, and the interactions between these nodes in system 100.

For example, in certain embodiments, each virtual interaction profile can be indexed based on shared characteristics across given users 124 (inferred from identifier objects 128), transaction types, and typical interaction paths, providing a basis for method 600, discussed below. The knowledge base includes the target range of iterative NL dialogue interactions for each profile, as discussed in further detail below. Expressed another way, it is to be understood that a virtual interaction profile (such as virtual interaction profile 504a) can reflect an aggregation of NL interaction sequences between different client devices 116 and different agent terminals 140 where identifier objects 128 respective to those client devices 116 have shared characteristics (i.e. commonalities) such as, without limitation, behavioral patterns (e.g. travel frequency), demographics (e.g. ages, incomes, family profiles, holiday schedules), travel preferences (e.g. air, rail, first class, economy class), travel purposes (e.g. business vs leisure travel), geographies (origins and destinations). For example, users identified as frequent business travelers may have different booking preferences than leisure travelers, which can influence how the AI engine 120 mimics interaction sequences and applies those learnings during future simulations, as elaborated in relation to method 600.

It should be understood that block 408 can employ different AI models for analyzing and generating interaction profiles. For example, reinforcement learning can can be employed to refine virtual electronic behaviors by continuously learning from interaction outcomes. For example, using reinforcement learning would allow the AI to adjust its recommendations based on the effectiveness of previous dialogues, creating more adaptive virtual agents that better reflect the dynamic interactions captured in block 404.

It should be understood that block 412 can be varied by expanding the types of profiles and interactions stored within the knowledge base. In addition to text-based interactions, variations can include integrating voice, video, or virtual/augmented reality interactions. Thus virtual profiles are contemplated that are designed for immersive environments, such as VR-based travel experiences. These variations can enable the AI engine 120 to simulate a broader range of interaction types.

It should also be understood that the dynamic nature of transaction management engines 104 can also influence performance of method 400. For instance, it is axiomatic that dynamic transaction management engines 104 will introduce real-time changes in availability, such that AI engine 120 can continuously consider updates to interaction sequences that impact the creation of virtual interaction profile 504a, considering as needed the stochastic nature of dynamic transaction management engines 104. Virtual electronic profiles generated at block 408 can therefore be made flexible to handle frequent updates, reflecting the rapid changes in the transactional environment of dynamic transaction management engines 104. As a specific non-limiting example, payment processing engine 104-n may introduce variations when interactions include delays or failures in payment confirmation. Such scenarios contemplate having virtual interaction profile 504a include interaction patterns for handling payment-related issues, adjusting the flow of interactions based on common resolution paths.

The training process in method 400 can also adapt to the behavior of meta-search engines such as engine 104-4. Changes in search algorithms or variability in search results can influence how virtual interaction profile 504a may, for example, adjust its interaction strategies to accommodate differences in how agents access and process search results from multiple sources during booking processes.

Scalability considerations are relevant for block 404 as the volume of interaction sequences increases. The ability to manage larger datasets, including metadata like time-stamps and transaction identifiers, can allow AI engine 120 to adapt to an expanding number of client devices 116 and a growing number of dynamic transaction management engines 104. Load balancing and fault tolerance measures can be implemented as part of the overall system architecture, allowing AI engine 120 to maintain performance even as it processes diverse data sources and interaction sequences.

Furthermore, variations in customizing virtual electronic profiles (e.g. Virtual interaction profile 504a) for different industries can directly impact block 408 and block 412. While travel booking is the primary focus in the present embodiment, the same training method can be adapted for industries like healthcare or finance, where agent interactions with users have distinct requirements and where transaction management engines 104 have their own dynamic nature for those industries. For instance, healthcare interactions might involve complex regulatory considerations for patient privacy, while financial services may focus on adapting to fluctuating market conditions. In each case, AI engine 120 can adjust the parameters of virtual electronic profiles (e.g. Virtual interaction profile 504a) to meet the specific needs of environment, so that the generated interaction profiles are relevant to the industry context.

Figure 5 shows system 100a, which is a variant on system 100. Like elements in system 100a bear like references to their counterparts in system 100. Notably, system 100a also includes at least one virtual interaction profile 504a. Virtual interaction profile 504a is the result of performance of method 400, wherein AI engine 120 is now trained to replicate the portion of interaction sequences associated with users 124 - thus virtual interaction profile 504a includes a plurality of bots 124a which electronically "mimic" users 124. Thus, virtual interaction profile 504a also includes virtual identifier objects 128a and virtual client devices 116a.

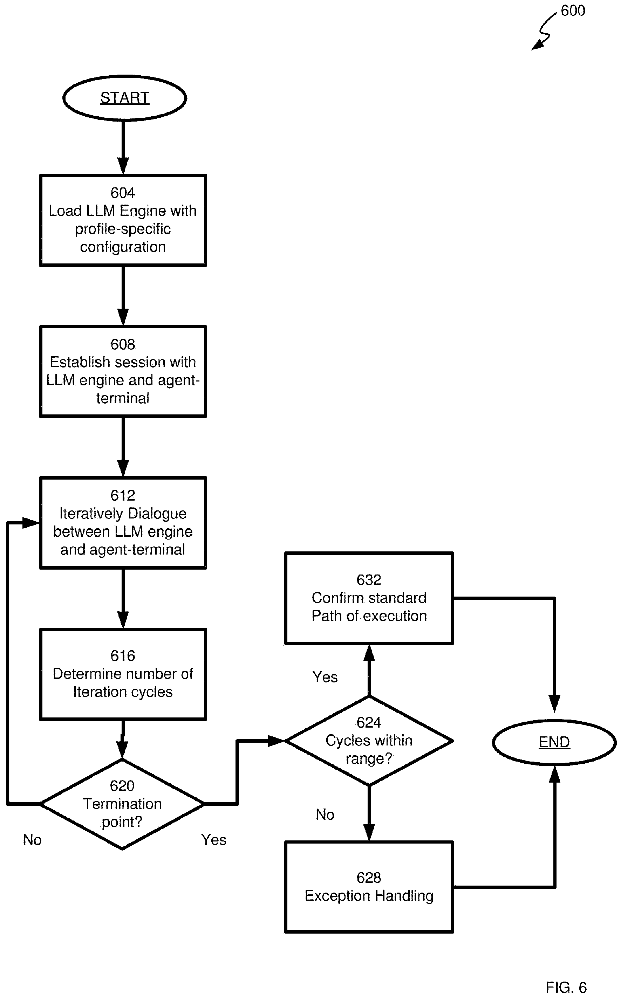

System 100a thus facilitates iterative exchanges between virtual client devices 116a and agent terminals 140, where AI engine 120 monitors the resulting interaction sequences and determines when they reach a defined termination point, as further described in relation to method 600 of Figure 6. Virtual interaction profile 504a allows AI engine 120 to adapt responses of bots 124a according to the prompts from dialogues received from trainee-agents 144a via their respective agent terminals 140 while accommodating the stochastic, dynamically changing transaction variables in dynamic transaction management engines 104. Utilizing termination points, the AI engine 120 evaluates whether the interactions associated with agent terminals 140a align, or not, with expected interaction patterns based on the simulations of bots 124a by virtual interaction profiles 504a, and to record such evaluations with the identifier object 148a respective to the relevant trainee-agent 144a.

Figure 6 shows a flowchart depicting a method for deploying a natural language (NL) virtual interaction profile, indicated generally at 600. Method 600 can be implemented on system 100a. Persons skilled in the art may choose to implement method 600 on system 100a or variants thereon, or with certain blocks omitted, performed in parallel or in a different order than shown. Method 600 can thus also be varied. However, for purposes of explanation, method 600 will be described in relation to its performance on system 100a with a specific focus on treating method 600 as, for example, application 224-4 maintained within AI engine 120 and its interactions with the other nodes in system 100a. As noted, method 600 also typically contemplates that method 400, or a variant thereon, has already been performed and that AI engine 120, including virtual interaction profile 504a is available either from non-volatile memory 216 or volatile memory 220 or a combination of both.

Block 604 comprises loading a large language model (LLM) engine with a profile-specific configuration. To elaborate, block 604 involves configuring the LLM engine within AI engine 120 using a virtual interaction profile 504a. This profile-specific configuration is based on the virtual profiles generated from method 400, which reflect the behavior patterns and interaction sequences of users 124 to create bots 124a. The configuration process includes the input of parameters, such as the target range of iterative NL dialogue interactions up to a termination point, derived from the training dataset. The LLM engine can thus simulate interactions that mimic user dialogue patterns captured in the virtual interaction profiles 504a. In other words, the LLM engine adapts responses of bots 124a according to the prompts from dialogues received from trainee-agents 144a via their respective agent terminals 140 while accommodating the dynamically changing transaction variables in dynamic transaction management engines 104. For instance, the configuration may involve specifying how virtual profiles 504a respond to changes in transaction variables derived from dynamic transaction management engines 104.

Block 608 comprises establishing a session with an agent-terminal within the LLM engine according to the profile-specific configuration. To elaborate, block 608 involves initiating a session between the LLM engine and a specific agent terminal 140a associated with trainee-agent 144a. During this session, the LLM engine, using the virtual profile 504a, begins the simulated interaction, sending and receiving prompts via a bot 124a in a manner that replicates the interaction sequences of a real user 124. The profile-specific configuration loaded in block 604 guides the behavior of bots 124a and virtual client devices 116a, so that the dialogue aligns with the patterns and responses typical of the user interactions represented in the training dataset.

Block 612 comprises iteratively dialoguing between the agent-terminal and the LLM engine. To elaborate, block 612 involves the LLM engine simulating user-like dialogue responses based on virtual interaction profile 504a while the agent terminal 140a sends prompts. The LLM engine processes the prompts from agent terminal 140a and generates corresponding responses that reflect the interaction profile, adjusting as needed to the dynamically changing transaction variables from engines 104. These interactions continue iteratively, allowing the trainee-agent 144a to engage in a sequence of dialogues with the virtual profiles, mirroring the patterns of real-world interactions that AI engine 120 has been trained to emulate via bots 124a. This iterative dialogue continues until a defined termination point is reached, as discussed below per block 620.

Block 616 comprises determining a total number of iteration cycles up to the termination point. To elaborate, block 616 involves AI engine 120 calculating the total number of back-and-forth exchanges, or iteration cycles, that occur during the session between the relevant bot 124a and the relevant agent terminal 140a. The LLM engine keeps track of each cycle as it processes the interactions between virtual client devices 116a and agent terminals 140a. The termination point signals the end of the dialogue sequence, such as when an electronic itinerary is finalized or when an interaction is otherwise concluded (or as termination point may be otherwise defined). The total number of cycles can thus provide a quantitative measure of the dialogue's complexity and the engagement level of trainee-agent 144a.

Block 620 comprises determining whether a termination point has been reached. To elaborate, block 620 involves AI engine 120 evaluating if the interaction sequence has concluded based on the defined criteria for a termination point. As described elsewhere, termination points can include, for example, scenarios such as a confirmed booking, an abandoned booking, or a request for further human intervention. If the termination point is reached, the process proceeds to block 524; otherwise, the dialogue sequence continues.

Block 624 comprises determining if the total number of iteration cycles is within a target range. To elaborate, block 624 involves AI engine 120 comparing the calculated iteration cycles to a predefined target range. This target range can be based on the typical dialogue interactions from the training in method 400. If the total number of cycles falls within the acceptable range, it suggests that the interaction aligns with expected user behavior. If so, AI engine 120 proceeds to block 632; if not, the process moves to block 628.

Block 628 comprises generating an exception handling routine if the total number of iteration cycles is outside the target range. To elaborate, block 628 involves AI engine 120 initiating a response if the interaction with agent terminal 140a deviates significantly from the expected range of cycles. The exception handling routine is not particularly limited, but may involve logging the deviation within identifier object 148a, adjusting the profile-specific configuration, or providing training-feedback for the trainee-agent 144a. Accordingly, outlier behaviors are noted and can be addressed in future iterations of method 600, preventing trainee-agent 144a from participation in system 100 and limiting their activities to system 100a until such time as a "yes" determination at block 624 is achieved.

Block 632 comprises confirming a standard path of execution if the total number of iteration cycles is within the target range. To elaborate, block 632 involves AI engine 120 having previously validating that the dialogue session with the agent terminal 140a has proceeded as expected, to a termination point consistent with the training from method 400. This confirmation becomes associated with the relevant identifier object 148a, indicating that a trainee-agent 144a can proceed within system 100 in similar fashion to other agents 144 and that the inclusion of such a trainee-agent 144a within system 100 will result in system 100 having similar performance characteristics as before trainee-agent 144a was introduced. Once confirmed, the session can be logged as a successful training sequence, and the process concludes at the END oval. (Or method 600 can restart). Indeed, one standard path of execution at block 632 can include automatically connecting the agent terminal 140a being used by the trainee-agent 144a that reached block 632 to system 100. (The reverse may be true as well, if a given agent 144 operating in system 100 starts to perform outside a target range, in a version of system 100 that monitors when a number of iterations to reach a termination point has been exceeded in a live exchange, then that agent 144 can be switched to system 100a from system 100 and pushed through method 600.)

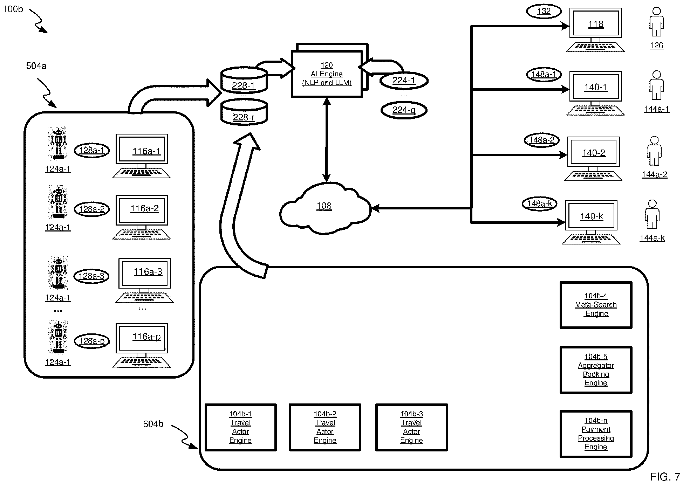

Referring now to Figure 7, a variant on system 100a is shown and is indicated as system 100b. System 100b is substantially the same as system 100a, except that dynamic transaction management engines 104 have been replaced by virtual dynamic transaction management engines 104b, which themselves are part of a virtual interaction transaction management profile 604b. System 100b can be used with method 600, either instead of or alongside with system 100a. Of note is that system 100a has live dynamic data, whereas system 100b has virtualized dynamic data. System 100b has the advantage of being a more self-contained environment than system 100a which does not strain resources of dynamic transaction management engines 104, while system 100a has the advantage of less coding complexity for AI engine 120 because dynamic transaction management engines 104 are omitted from AI engine 120. **It** can also be desired to hybridize system 100a and system 100b, with some engines 104 reflecting live data fees and other engines 104b being virtualized.

In view of the above it will now be apparent that variants, combinations, and subsets of the foregoing embodiments are contemplated. For example, while the current disclosure primarily focuses on applications within the travel industry, the teachings herein can be adapted for other domains involving iterative agent-user interactions, such as healthcare management systems, financial services, and customer support platforms. In these contexts, dynamic transaction management engines 104 can be configured to handle different sets of dynamically changing variables-such as real-time stock prices or patient records-while maintaining the AI engine's ability to simulate user interactions via virtual profiles.

Further, while the described embodiments involve using virtual client devices 116a and virtual identifier objects 128a for training purposes, it is contemplated that real client devices 116 and real identifier objects 128 can be integrated into system 100a or system 100b during live deployments. This hybrid approach allows for the AI engine 120 to adapt to real-time user feedback while leveraging historical virtual training data, ensuring that the system remains responsive to both simulated and real interactions.

As another example, method 400 training of AI Engine 120 at block 404 can include a subjective rating from a given user 124 of a given agent 144 associated with the termination point of a given set of interactions, thereby further providing training of AI engine 120 as to a model virtual interaction profile at block 408 and the collective knowledge base at block 412.

It is also noted that the scope of the virtual electronic profiles 504a can extend beyond text-based dialogues to include multimodal interactions, such as voice, video, and augmented reality (AR) sessions, allowing the AI engine 120 to simulate and adapt to more complex interaction scenarios. Such variations can be particularly relevant for customer service applications where agents may need to switch between different communication channels, ensuring that the training remains robust across all modalities.

Additionally, system 100a and system 100b can be combined with external machine learning or AI platforms through APIs, enabling data exchange between the AI engine 120 and third-party analytical tools. This allows system 100a or 100b to incorporate advanced analytics or perform domain-specific adjustments that may be offered by such platforms, thus extending the system's adaptability to evolving industry standards and practices.

In some embodiments, system 100a can be configured to run alongside system 100b for a variety of reasons, such as a form of load balancing, where virtual dynamic transaction management engines 104b handles peak training loads while live dynamic transaction management engines 104 manage active real-world transactions. This can enable system 100 to operate efficiently during periods of high demand, without impacting the computing resources of dynamic transaction management engines 104 while continuing to improve the accuracy and reliability of virtual profiles 504a.

Moreover, while virtual profiles 504a are designed to simulate user behavior, it is contemplated that variations may include integrating real-time data feedback loops from active users 124, enabling the AI engine 120 to update and refine virtual profiles in near real-time. This approach allows for adaptive learning, where the AI engine 120 is able to update interaction patterns based on recent data from system 100a or 100b, leading to enhanced responsiveness to changes in user behavior or transaction variables. Again, a subjective quality rating of a given agent 144 from a given user 124 can be applied in this sort of training and/or refinement of virtual profiles.

It is also contemplated that system 100b can be adapted for use in regulatory environments that require data privacy. By virtualizing all transaction data through virtual dynamic transaction management engines 104b, sensitive data can be processed within a controlled simulation environment without accessing real-world servers, ensuring compliance with privacy regulations such as General Data Protection Regulation (GDPR) or California Consumer Privacy Act (CCPA) while still enabling effective training and simulation processes.

The described embodiments may be implemented in various configurations of hardware and software, including but not limited to cloud-based environments, edge computing setups, or local server deployments, depending on the desired speed, scalability, and security requirements of the application. For instance, AI engine 120 can be deployed as a distributed system across multiple data centers to support global travel operations, or as a localized solution for a specific market.

It is to be understood that one or more of the applications may include a machine learning studio platform with any desired related machine learning (ML) based algorithms and/or neural networks, and the like. The machine learning applications can utilize various algorithms, including but not limited to: generalized linear regression, random forest, support vector machine, gradient boosting regression, decision tree, generalized additive models, neural networks, deep learning, evolutionary programming, Bayesian inference, and reinforcement learning algorithms. Algorithms such as generalized linear regression, random forest, support vector machine, gradient boosting regression, decision tree, and generalized additive models may be preferred over neural networks, deep learning, and evolutionary programming algorithms.

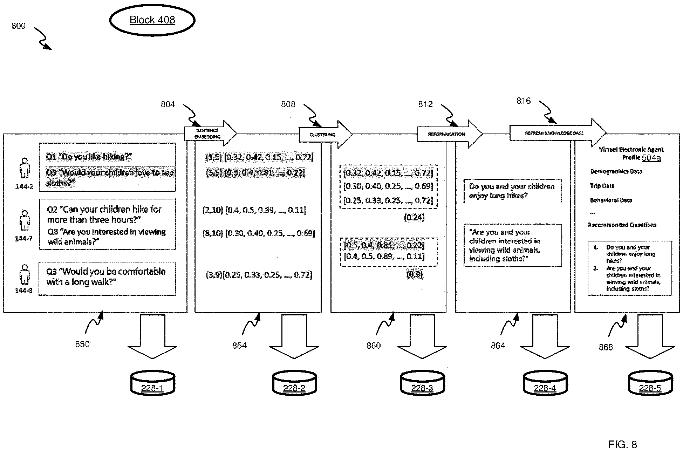

Notwithstanding the generality of the foregoing, Figure 8 illustrates a specific example method, generally indicated at 800, for generating a virtual interaction profile as part of implementing block 408 within method 400. Method 800 provides an example implementation for transforming natural language (NL) interactions into structured data that can be used to populate a knowledge base of virtual interaction profiles 504a, supporting block 412. Method 800 includes method blocks 804, 808, 812, and 816, with corresponding inputs and outputs as follows.

Method 800 with input data 850, representing a training data set as collection of NL interactions of the type "questions asked by the agent." These NL interactions originate from a training dataset received at block 404, focusing on questions that fall within the target range of iterative NL interactions identified as optimal for dialogues. The input data 850 is structured to preserve the order in which questions were asked during a dialogue sequence and records the total number of questions asked. This dataset 850 forms the foundation for generating sentence embeddings in block 804.

Block 804 comprises embedding sentences. Specifically, the NL interactions from input data 850 are transformed into dense vector representations, referred to as sentence embedding data 854. This transformation leverages sentence embedding techniques, which map the NL interactions into multi-dimensional vector space. The resulting dense vectors encode semantic relationships between different NL interactions while preserving contextual meaning. For example, embedding data 854 ensures that similar questions, such as "Do you like hiking?" and "Would your children enjoy long walks?" are numerically proximate within the vector space, facilitating clustering in the subsequent block.

Block 808 comprises clustering. Sentence embedding data 854 is processed in block 808 using clustering algorithms, such as K-means or nearest neighbors, to group semantically similar NL interactions into clusters. The output of block 808 is clustered data 860, which represents these groupings in vector form. Each cluster includes a normalized representation of its constituent NL interactions, allowing patterns within the data to emerge. For example, clustered data 860 might group questions about outdoor activities ("Do you and your children enjoy long hikes?") into one cluster while questions about wildlife ("Are you interested in viewing wild animals, including sloths?") are grouped separately. The position of each cluster is used to guide subsequent blocks.

Block 812 comprises reformulation. In block 812, clustered data 860 is processed using a large language model (LLM) engine to reformulate the NL interactions within each cluster into concise and coherent questions. The output of block 812 is reformulated data 864, which includes natural language questions generated by the LLM engine based on the clustered patterns. For instance, the cluster containing questions like "Do you like hiking?" and "Would your children enjoy long walks?" might be reformulated into a single, contextually relevant question: "Do you and your children enjoy long hikes?"

Block 816 comprises refreshing or updating the knowledge base: Reformulated data 864 is then passed to block 816, where it is integrated into the knowledge base for virtual interaction profiles 504aas "recommended questions." (Continuing our example: "1. Do you and your children enjoy long hikes? And 2. Are you and your children interested in viewing wild animals, including sloths?) The output of block 816, referred to as virtual interaction profile data 868, represents the finalized questions selected for use in future dialogues. These recommended questions are stored as part of the virtual interaction profile 504a within the knowledge base created in block 412. For example, virtual interaction profile data 868 might include questions like "Do you and your children enjoy long hikes?" flagged as relevant to certain demographic or behavioral attributes.

Method 800 can thus leverage advanced ML techniques, including sentence embeddings, clustering, and LLM-driven reformulation, to align NL interaction sequences with predefined efficiency thresholds.

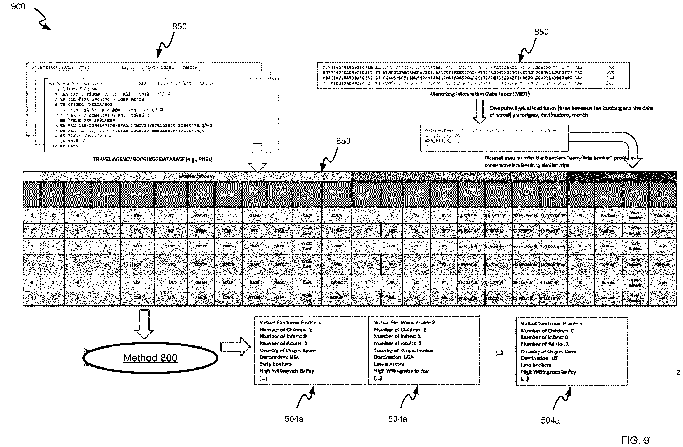

To help further understand method 800, Figure 9 shows a schema 900 that provides an example implementation for building virtual interaction profiles 504a by leveraging multiple data sources. Schema 900 illustrates how input data 850, originating from heterogeneous data sources such as travel agency booking databases (e.g., Passenger Name Records (PNRs)) and marketing information data tapes (MIDT), can be aggregated, processed, and transformed into virtual interaction profiles 504a.

Input data 850 comprises structured and unstructured information from PNRs and MIDT. PNRs contain details such as traveler names, itineraries, seating preferences, and payment methods, while MIDT provides aggregate market data, including origin-destination pairs, lead times, and other travel trends. These data sources are pre-processed and merged into a unified dataset, referred to as "aggregated data," which serves as the foundation for further transformations.

The aggregated data is transformed and enriched in multiple stages. For example:
Transformed/Calculated Data: Data points such as trip duration, lead time (time between booking and travel date), and geolocation coordinates (e.g., latitude and longitude for departure and destination cities) are computed from raw data. This enables the system to derive meaningful patterns and trends.
Inferred Data: Behavioral and demographic insights, such as whether the traveler is part of a family group, their trip purpose (business vs. leisure), booking profile (early vs. late booker), and willingness to pay, are inferred based on clustering techniques and predictive models applied to the transformed data.

Method 800 is performed on that input data, and notably, block 808 applies clustering techniques (e.g., K-means, hierarchical clustering, Gaussian mixture models) to aggregate similar traveler behaviors and preferences. For instance, travelers with short lead times and high willingness to pay may be grouped as "late bookers," while those with long lead times and lower prices per booking are identified as "early bookers." These clusters are then used to generate virtual interaction profiles 504a.

Each virtual interaction profile 504a includes attributes such as the number of children, adults, and infants; the country of origin and destination; the booking profile (e.g., early booker, late booker); and behavioral indicators like willingness to pay. These profiles enable the AI engine 120 to simulate and personalize interactions based on historical data.

For example, as shown in schema 900, a virtual interaction profile 504a for a specific traveler may include:
Demographics: Two adults, two children, origin: Spain, destination: USA.
Behavioral Insights: Early bookers, high willingness to pay.
Contextual Preferences: Trip purpose: leisure.

Schema 900 demonstrates how virtual interaction profiles 504acan be iteratively refined and expanded by incorporating new data and insights. This ensures that the AI engine 120 remains responsive to evolving user behaviors and market conditions, aligning the system with the goal of providing optimal NL interaction recommendations and tailored user experiences. The outputs from method 800, shown as virtual interaction profiles 504a, directly integrate into the knowledge base generated in block 412.

A person skilled in the art will now appreciate that the teachings herein can improve the technological efficiency and computational and communication resource utilization across system 100 by reducing redundant interactions with dynamic transaction management engines 104 through iterative interaction cycle control between agent terminals 140 and client devices 116. By setting a target number of iteration cycles, the interaction sequences are aligned with predefined efficiency thresholds for accessing of dynamic transaction management engines 104, thereby minimizing unnecessary access to transaction engines dynamic transaction management engines 104 and optimizing computational resource allocation across the network 108.

It should be recognized that features and aspects of the various examples provided above can be combined into further examples that also fall within the scope of the present disclosure. In addition, the figures are not to scale and may have size and shape exaggerated for illustrative purposes.

## Claims

1. A method for training an AI engine (120) within a dynamic transaction management system, comprising:
receiving (404) a training electronic dataset of natural language (NL) interaction sequences between a plurality of client devices and plurality of agent terminals; the interaction sequences including dynamically changing transaction variables derived from a plurality of dynamic transaction management engines; the interaction sequences concluding with a termination point;
generating (408) at least one virtual interaction profile including a target range of iterative NL dialogue interactions up to the respective termination point; the at least one virtual interaction profile further based on the training electronic dataset of NL interaction sequences;
creating (412) a knowledge base of the virtual interaction profiles to meet the target number of iterative interaction cycles.

2. The method of claim 1, wherein the virtual interaction profile includes a plurality of parameters representing response times, dialogue flow patterns, and common interaction paths inferred from past interaction sequences, further structured to optimize response efficiency across varying transaction conditions.

3. The method of claim 1 or claim 2, wherein the training electronic dataset includes metadata associated with each interaction sequence, the metadata comprising time-stamps, session identifiers, and transaction-specific dynamic variables, thereby allowing the virtual interaction profile to simulate time-sensitive responses.

4. The method of any preceding claim, wherein the virtual interaction profile includes predictive models for estimating future interaction outcomes based on current transaction variables and historical interaction patterns.

5. The method of any preceding claim, further comprising integrating voice-to-text and text-to-voice capabilities into the virtual interaction profile, enabling seamless multimodal interactions between client devices and agent terminals.

6. The method of any preceding claim, further comprising clustering user attributes within the training electronic dataset to create segmented virtual interaction profiles that optimize responses based on shared demographic or behavioral characteristics.

7. The method of any preceding claim, wherein the updating of the virtual interaction profile incorporates real-time feedback from active user sessions to dynamically adjust the target range of iterative dialogue interactions.

8. A method for deploying a natural language (NL) virtual interaction profile for a dynamic multi-component transaction management system comprising:
loading a large language model (LLM) engine with a profile-specific configuration based on a virtual interaction profile; the virtual interaction profile including a target range of iterative NL dialogue interactions and based on a training electronic dataset of NL interaction sequences between a plurality of client profiles and plurality of electronic profiles having dynamically changing transaction variables;
establishing a session with an agent-terminal within the LLM engine according to the profile-specific configuration;
iteratively dialoguing between the agent-terminal and the LLM engine by receiving prompts from the agent-terminal and responding to the prompts via the virtual interaction profile via the LLM engine until a termination point;
determining a total number of iteration cycles up to the termination point;
controlling an output device to generate an exception handling routine if the total number of iteration cycles is outside a target range; and,
controlling the output device to confirm a standard path of execution if the total number of iteration cycles is within the target range.

9. The method of claim 8, wherein the dynamically changing transaction variables include stochastic fluctuations in service availability and real-time pricing, and wherein the profile-specific configuration of the LLM engine accounts for these fluctuations by dynamically adjusting response parameters within the interaction sequence.

10. The method of claim 8 or claim 9, wherein the LLM engine is configured to prioritize interaction paths based on historical success rates and user satisfaction scores associated with previous interaction sequences.

11. The method of any one of claim 8, 9 or 10, wherein the exception handling routine further includes generating alerts or recommendations for manual intervention by a system administrator or human agent.

12. The method of any one of claims 8-11, wherein the database logs are periodically analyzed using machine learning algorithms to identify emerging patterns or anomalies in interaction sequences, which are then used to refine virtual interaction profiles.

13. The method of any one of claim 8-12, wherein the LLM engine dynamically adjusts the response timing and content of the virtual interaction profile to simulate realistic delays and conversational tones reflective of human interactions

14. The method of any one of claims 8-13, wherein the virtual interaction profile includes a predictive model for suggesting alternative transaction options when the initial interaction sequence approaches a termination point.
